(19) Europäisches Patentamt
European Patent Office
Office européen des brevets

(11) Publication number: **0 060 887**
**B2**

(12) # NEW EUROPEAN PATENT SPECIFICATION

(45) Date of publication of the new patent specification: 09.08.89

(51) Int. Cl.$^4$: **F 01 D 5/16**

(21) Application number: 81902881.2

(22) Date of filing: 02.10.81

(86) International application number: PCT/US 81/01339

(87) International publication number: WO/8201216 (15.04.82 Gazette 82/10)

(54) **BLADE TO BLADE VIBRATION DAMPER.**

(30) Priority: 02.10.80 US 193514

(43) Date of publication of application: 29.09.82 Bulletin 82/39

(45) Publication of the grant of the patent: 14.08.85 Bulletin 85/33

(45) Mention of the opposition decision: 09.08.89 Bulletin 89/32

(84) Designated contracting states: DE FR NL SE

(56) References cited:
DE-A- 3 008 890
FR-A- 989 556
FR-A- 1 374 917
SE-C- 153 004
US-A- 2 942 843
US-A- 2 999 668
US-A- 3 181 835
US-A- 3 723 023
US-A- 3 748 060
US-A- 3 881 844
US-A- 3 888 601
US-A- 4 101 245
US-A- 4 182 598

(73) Proprietor: UNITED TECHNOLOGIES CORPORATION
United Technologies Building 1, Financial Plaza
Hartford, CT 06101 (US)

(72) Inventor: JONES, John C.
1719 S.W. Wildcat Trail
Stuart, FL. 33494 (US)
Inventor: SIFFORD, Perry, P.
17941 Via Rio
Jupiter, FL 33458 (US)
Inventor: SUTTON, Joel F.
12908 Wilton Road
Juno Isles, FL 33408 (US)

(74) Representative: Weydert, Robert et al
OFFICE DENNEMEYER S.à.r.l. P.O. Box 1502
L-1015 Luxembourg (LU)

EP 0 060 887 B2

Jouve, 18, rue St-Denis, 75001 Paris, France

## Description

The invention relates to a rotor assembly according to the precharacterizing portion of independent claim 1. A rotor assembly of this type is disclosed in DE-A-30 08 890.

In a typical rotor assembly of an axial flow turbine, a plurality of rotor blades extend outwardly from a disk, or drum shaped structure. The blades extend across an annular flowpath for working medium, and in turbine embodiments extract energy from the working medium gases flowing across the blades. Each of the blades is formed of an airfoil section extending into the flowpath, a root section interlockingly engaging the disk or drum, and a platform section defining the inner boundary of the working medium flowpath.

The sequence of rotor blades passing through local aerodynamic perturbations in the working medium flowpath initiate alternatingly increased and decreased loadings on the blades. This variation in loading characteristic induces blade deflection and imparts a stress on the blade material. If the frequency at which the loading characteristic varies is coincident with the natural frequency of the blade resonance occurs ; the deflection amplitudes become reinforcing and vibratory damage likely results.

Vibratory phenomenon and the need to attend to such problems in rotary machines has long been recognized and many attempts have been made in the past to solve rotor blade vibration problems.

Reference may be made to US-A-2 942 843 according to which vibration dampers are added to a segmented blade tip shroud ring, the dampers being arranged to provide friction damping of blade vibrations. Blade to blade vibration dampers being not concerned by US-A-2 942 843 according to which the vibration dampers are mounted to adjacent ends of shroud ring segments and extend axially of the rotor. Adjacent frictional damper haves being in frictional contact with one another.

Blade to blade vibration dampers are known from US-A-4 182 598, wherein dampers T-shaped in radial cross-section extend axially between and engage the root sections of adjacent blades beneath the blade platforms. The blade to blade vibration damper may be used in conjunction with a toggle damper received in a groove of the coverplate and urged by centrifugal force against the underside of the blade platform. Similar dampers cooperating with individual blades are known from US-A-2 999 668.

Reference is also made to US-A-3 723 023 which discloses a damper assembly comprising a pair of blade to blade vibration dampers secured by an interference fit to an interconnecting shaft. Each damper is disposed in a plane normal to the axis of rotation of the rotor assembly and has a bifurcated radial outer end shaped to engage the undersides of two adjacent blade platform sections. It is also referred to US-A-4 101 245 which discloses a blade to blade vibration damper extending in axial direction of the rotor assembly and having radially outwardly facing axial rail portions adapted to engage the undersides of the platforms at locations spaced from the edges of the blade platform sections.

DE-A-30 08 890 already referred to is concerned with a coverplate mounted blade to blade vibration damper having a pointed or tapered tip portion engageable with the undersides of two adjacent blade platform sections at a V-shaped recess formed between chamfered inner portions of the adjacent side edges of the platforms. The known damper is mounted for a limited degree of twist movement on a cover plate stud and it is I-shaped in axial cross-section of the rotor assembly and since it engages the platforms at the chamfered side edge portions it has a limited dimension in circumferential direction of the rotor assembly.

The object of the invention is to provide a rotor assembly having an improved coverplate mounted blade to blade vibration damper reducing the slipload forces required to achieve sliding contact of the top bar of the damper along the undersides of the blade platforms.

To achieve this the rotor assembly according to the invention is characterized by the features of the characterizing portion of independent claim 1.

A principal advantage of the present invention is effective damping or rotor blade vibration. Vibratory stresses in the blades of an operating machine are reduced. Sliding contact of the top bar of the damper along the undersurfaces of the adjacent blade platforms is encouraged through a reduction in the required slip load forces for structures incorporating the disclosed concepts. The damper cross section geometry provides the longitudinal stiffness which is essential, along with low weight, for the enablement of friction damping slippage between the damper and the blade platforms.

The foregoing, and other features and advantages of the present invention will become more apparent in the light of the following description and accompanying drawing, wherein :

Figure 1 is a simplified cross section view taken through a portion of the turbine section of a gas turbine engine ;

Figure 2 is a simplified elevation view of a portion of the turbine section of Figure 1 including portions thereof broken away to reveal the blade vibration dampers ;

Figure 3 is a perspective view of a blade vibration damper constructed in accordance with the concepts of the present invention ; and

Figure 4 is an illustration of damper force loading.

The Figure 1 rotor assembly 10 is of the type utilized in the turbine section of a gas turbine

engine. The principal structural component is the rotor disk 12. A plurality of rotor blades, as represented by the single blade 14, interlockingly engage the rotor disk and extend radially outwardly therefrom into a flowpath 16. Each rotor blade has a root section 18 which engages the rotor risk and an airfoil section 20 which spans the flowpath. A platform section 22 forms the inner boundary of the working medium flowpath. A coverplate assembly 24 illustrated at the upstream end of the rotor disk in part holds the root sections of the rotor blades in engagement with the rotor disk and in part blocks the flow of working medium gases across the rotor assembly beneath the blade platforms. The coverplate assembly has affixed thereto a plurality of rotor blade dampers, as represented by the single damper 26. The damper has a « T » shaped cross section geometry and as illustrated is attached to the coverplate assembly by a rivet 28. The elongated top bar 30 of the « T » shaped damper rests against the underside of the platform section 20. The web 32 of the damper is penetrated by the attaching rivet. The web comprises a mounting portion and a principal structural portion between the top bar 30 and the mounting portion. The elongated top bar 30 comprises two radially outwardly facing lobed portions spaced from one another for engaging the blade platform sections 22 at locations spaced from the adjacent edges thereof.

As is illustrated in Figure 2 one damper 26 is disposed between each pair of adjacent rotor blades 14. The top bar 30 rests against the undersides of each of the two adjacent platform sections. Each of the attaching rivets 28 passes through a corresponding hole 34 in the web of the damper. A generous clearance is provided between each rivet and the connecting web hole so as to enable the damper to readily seat against the adjacent blade platform sections.

The damper 26 is of the generic « blade to blade » type. Vibratory deflection in each blade is transmitted across the damper to the adjacent blade. Vibratory energy is removed from the system at the interfaces A between the damper and the platform sections. Frictional forces generate heat at the interfaces A as the damper is caused to slide over the undersides of the platforms.

It is an essential feature of the present invention that sliding friction is enabled. To this end the damper is provided with a very high ratio of longitudinal stiffness to weight. Effective transmission of forces circumferentially around the disk from blade to blade along the longitudinal axis of the damper is accomplished. The « T » shaped cross section geometry is resistant to deflection under longitudinal loads resulting from the interblade transfer of vibratory energy and is resistant to transverse bending under centrifugal force loading in the operative environement at the interfaces A.

Detailed aspects of such dampers are illustrated in the Figure 3 perspective view. The damper is fabricated of nickel alloy material and has a weight of approximately one gram and eight tenths of a gram (1.8 g). Material has been distributed, nevertheless, for maximum effect in providing longitudinal and transverse stiffness. The top bar 30 of the damper has a width $W_T$ of approximately three millimeters (3 mm) and a height $H_T$ of approximately one millimeter and five tenths of a millimeter (1,5 mm). The principal structural portion of the web has a width $W_W$ of approximately two millimeters (2 mm) and a height $H_W$ of approximately three millimeters and four tenths of a millimeter (3,4 mm). The full height $H_F$ of the damper including the mounting portion of reduced width through which the hole passes is approximately thirteen millimeters (13 mm). The overall length L of the damper is also approximately thirteen millimeters (13 mm). In the damper illustrated spacing tabs 36 are provided to assist in stabilizing the damper within the coverplate assembly.

The fundamental principal of operation of the present damper can be visualized in the Figure 4 illustration. The interfaces A between a damper 26 and the blade platform sections 20 is shown. In order to be effective the damper must be capable of sliding along the points of interface A such that vibratory energy can be dissipated in the form of friction generated heat. The force F required to cause movement between the damper and the platforms is termed « slipload force » and is calculable in accordance with the formula below.

$$F = \mu N \phi$$

where

F = slipload force ;
$\mu$ = coefficient of friction ;
N = normal load ; and
$\phi$ = slipload factor.

The normal load is a function of damper weight and rotor speed of rotation and is the dominant factor in determining slipload force. The slipload factor $\phi$ is required to account for phase angle effects between leading or lagging blades.

As incredible as it may seem, the damper described by Figure 3 and weighing only one gram and eight tenths of a gram (1.8 g) generates a normal force at each point of interface A of three hundred eighty Newtons (380 N) in a typical high performance aircraft engine. The corresponding slipload force is eighty Newtons (80 N). In other words, a vibrating blade must be capable of generating a force along the axis of the damper of eighty Newtons (80 N) before frictional damping and dissipation of energy can occur.

The achieved low slipload force enabled by the present structure is a significant advance in the art and is sufficiently low to prevent the damper from locking up without sliding under centrifugal loads.

## Claims

1. A rotor assembly for an axial flow rotary machine, having a plurality of individually mounted blades (14), each having a platform section (22) and extending radially outwardly with respect to a rotor axis of rotation, a coverplate assembly (24) and a blade to blade damper (26) affixed to the coverplate assembly (24) and arranged in a plane normal to the axis of rotation and including a platform engaging thickened top portion and a web (32) radially inwardly of the top portion, said top portion being adapted to seat against a pair of adjacent blade platform sections (22) in response to centrifugally generated loads in an operating machine, and said top portion having a greater dimension in circumferential direction of the rotor assembly than in axial and radial direction thereof and being shaped to engage the undersides of adjacent platform sections (22) to permit sliding contact therebetween for frictional damping of vibrational energy, characterized in that the damper (26) is essentially T-shaped in axial cross-section of the rotor assembly, that said top portion is in form of an elongated bar (30) extending in circumferential direction of the rotor assembly and having two radially outwardly facing lobed portions spaced from one another for engaging the blade platform sections (22) at locations spaced from the adjacent edges of the blade platform sections (22), and that the web (32) is trapped in a slot of the coverplate assembly (24) and comprises a mounting portion and a principal structural portion between the top bar (30) and the mounting portion, the principal structural portion having a width greater than that of the mounting portion and being received with its radial inner portion in the slot of the coverplate assembly (24).

2. Rotor assembly according to claim 1, characterized in that the weight of the damper (26) is approximately 1.8 grams.

3. Rotor assembly according to claim 1 or 2, characterized in that the web mounting portion has spacing tabs (36) at its radially inner end to assist in stabilizing the damper in the slot of the coverplate assembly (24).

4. Rotor assembly according to any one of claims 1 to 3, characterized in that the principal structural portion of the web (32) has a width $W_W$ of approximately 2 mm and a height $H_W$ of approximately 3,4 mm.

5. Rotor assembly according to any one of claims 1 to 4, characterized in that the damper (26) has a length L of approximately 13 mm and the top bar (30) has a width $W_T$ of approximately 3 mm and a height $H_T$ of approximately 1,5 mm.

**Patentansprüche**

1. Rotorbaugruppe für eine Axialströmungsmaschine mit mehreren einzeln befestigten Schaufeln (14), die jeweils einen Plattformabschnitt (22) haben und sich in bezug auf die Rotordrehachse radial nach aussen erstrecken, mit einer Deckplattenanordnung (24) und einem Schaufel-Schaufel-Dämpfer (26), der an der Deckplattenanordnung (24) angebracht ist und in einer senkrecht zur Drehachse stehenden Ebene liegt und mit einem dickeren oberen Teil zum Berühren der Plattformabschnitte und einem radial innerhalb des oberen Teils liegenden Steg (32) versehen ist, wobei sich der obere Teil auf zentrifugal erzeugte Kräfte in einer arbeitenden Maschine hin auf zwei benachbarte Schaufelplattformabschnitte (22) aufsetzen kann, und der obere Teil eine grössere Abmessung in Umfangsrichtung der Rotorbaugruppe als in Axial- oder Radialrichtung derselben aufweist und so geformt ist, dass er die Unterseite von benachbarten Plattformabschnitten (22) berührt, um zwischen ihnen Gleitkontakt zur Reibungsdämpfung von Schwingungsenergie zu gestatten, dadurch gekennzeichnet, dass der Dämpfer (26) im wesentlichen T-förmig im Axialschnitt der Rotorbaugruppe ist, dass der obere Teil die Form einer langgestreckten Schiene (30) aufweist, die sich in Umfangsrichtung der Rotorbaugruppe erstreckt und zwei radial nach aussen weisende, gelappte, gegenseitigen Abstand aufweisende Teile hat zum Berühren der Schaufelplattformabschnitte (22) an Stellen, die Abstand von den benachbarten Rändern der Schaufelplattformabschnitte (22) aufweisen, und dass der Steg (32) in einem Schlitz der Deckplattenanordnung (24) angebracht ist, und einen Befestigungsteil sowie einen Hauptbauteil zwischen der oberen Schiene (30) und dem Befestigungsteil aufweist, wobei der Hauptbauteil eine Breite hat, die grösser ist als die des Befestigungsteiles und mit ihrem radial inneren Bereich in dem Schlitz der Deckplattenanordnung (24) aufgenommen ist.

2. Rotorbaugruppe nach Anspruch 1, dadurch gekennzeichnet, dass das Gewicht des Dämpfers (26) ungefähr 1,8 Gramm beträgt.

3. Rotorbaugruppe nach Anspruch 1 oder 2, dadurch gekennzeichnet, dass der Stegbefestigungsteil Abstandsnasen (36) an seinem radial inneren Ende hat, die das Stabilisieren des Dämpfers in dem Schlitz der Deckplattenanordnung (24) unterstützen.

4. Rotorbaugruppe nach einem der Ansprüche 1 bis 3, dadurch gekennzeichnet, dass der Hauptbauteil des Steges (32) eine Breite $W_W$ von ungefähr 2 mm und eine Höhe $H_W$ von ungefähr 3,4 mm hat.

5. Rotorbaugruppe nach einem der Ansprüche 1 bis 4, dadurch gekennzeichnet, dass der Dämpfer (26) eine Länge L von ungefähr 13 mm hat und dass die obere Schiene (30) eine Breite $W_T$ von ungefähr 3 mm und eine Höhe $H_T$ von ungefähr 1,5 mm hat.

**Revendications**

1. Ensemble de rotor pour une machine rotative à flux axial ayant plusieurs aubes (14) montées individuellement, ayant chacune une section en plate-forme (22) et s'étendant radialement vers l'extérieur par rapport à l'axe de rotation de l'ensemble de rotor, une plaque de recouvrement

(24) et un amortisseur aube-aube (26) attaché à la plaque de recouvrement (24) et disposé dans un plan perpendiculaire à l'axe de rotation et comprenant une partie supérieure plus épaisse d'engagement de la plate-forme et une âme (32) radialement à l'intérieur de la partie supérieure, ladite partie supérieure étant apte à s'appliquer contre une paire de sections en plate-forme (22) d'aubes en réponse à des charges engendrées par la force centrifuge dans une machine en fonctionnement, et la partie supérieure ayant en direction circonférentielle de l'ensemble de rotor une plus grande dimension qu'en direction axiale et radiale de cet ensemble et étant conformée pour venir en contact avec les côtés inférieurs de sections en plate-forme adjacentes (22) pour autoriser un contact par glissement entre elles en vue d'amortir de l'énergie de vibration par friction, caractérisé en ce que l'amortisseur (26) est essentiellement conformé en T en section transversale axiale de l'ensemble de rotor, en ce que la partie supérieure prend la forme d'une barre allongée (30) s'étendant en direction circonférentielle de l'ensemble de rotor et comportant deux parties lobées tournées radialement vers l'extérieur et espacées l'une de l'autte en vue de venir en contact avec les sections en plate-forme (22) d'aubes en des emplacements espacés des bords adjacents des sections en plate-forme (22) d'aubes, et en ce que l'âme (32) est emprisonnée dans une fente de la plaque de recouvrement (24) et comporte une partie de montage et une partie structurelle principale entre la barre supérieure (30) et la partie de montage, la partie structurelle principale ayant une largeur supérieure à celle de la partie de montage et étant reçue par sa partie radiale intérieure dans la fente de la plaque de recouvrement (24).

2. Ensemble de rotor selon la revendication 1, caractérisé en ce que le poids de l'amortisseur (26) est d'environ 1,8 grammes.

3. Ensemble de rotor selon la revendication 1 ou 2, caractérisé en ce que la partie de montage de l'âme comprend des pattes d'espacement (36) sur son extrémité radialement interne pour faciliter la stabilisation de l'amortisseur dans la fente de la plaque de recouvrement (24).

4. Ensemble de rotor selon l'une quelconque des revendications 1 à 3, caractérisé en ce que la partie structurelle principale de l'âme (32) a une largeur $W_W$ d'environ 2 mm et une hauteur $H_W$ d'environ 3,4 mm.

5. Ensemble de rotor selon l'une quelconque des revendications 1 à 4, caractérisé en ce que l'amortisseur (26) a une longueur L d'environ 13 mm et en ce que la barre supérieure (30) a une largeur $W_T$ d'environ 3 mm et une hauteur $H_T$ d'environ 1,5 mm.

FIG. 1

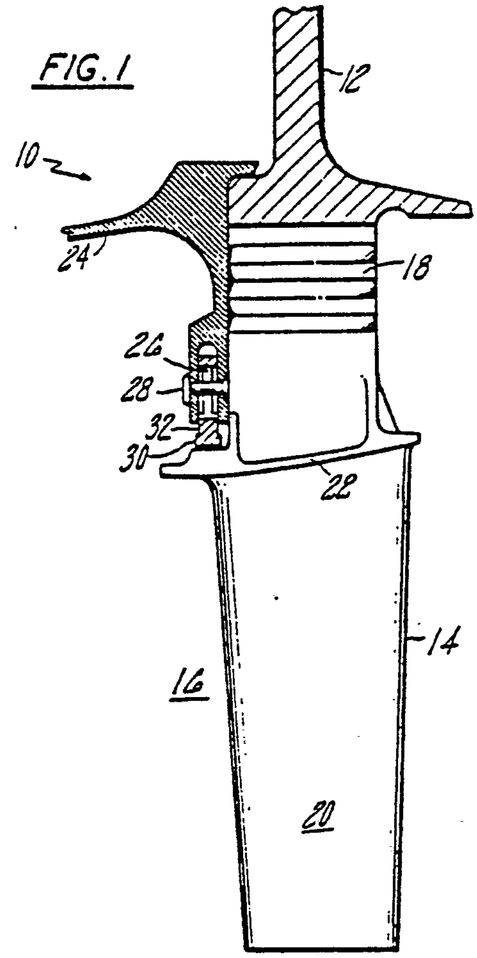


FIG. 3

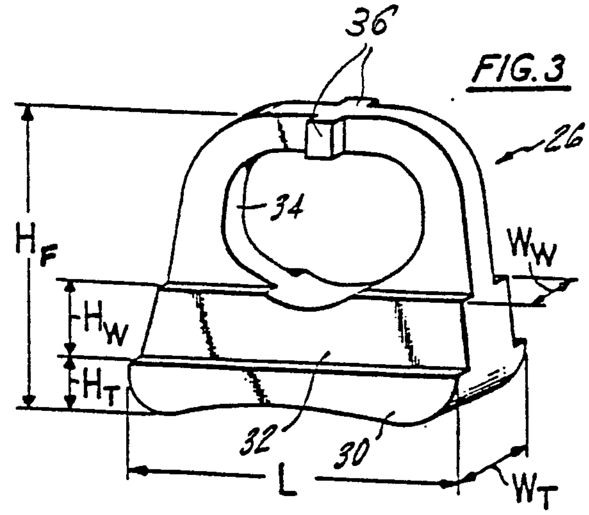


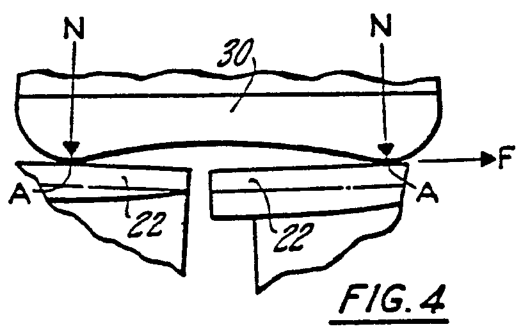


FIG. 4

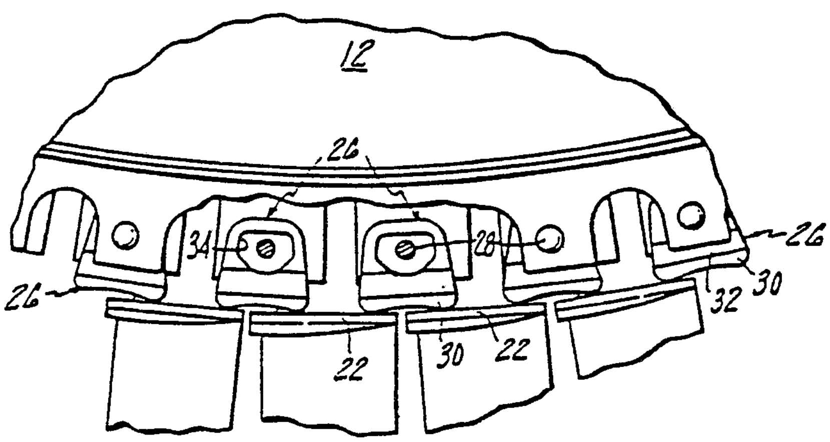


FIG. 2